# EUROPÄISCHE PATENTSCHRIFT

(11) **EP 1 104 498 B1**
(45) Veröffentlichungstag und Bekanntmachung des Hinweises auf die Patenterteilung: **14.05.2003**
(21) Anmeldenummer: 99926463.3
(22) Anmeldetag: 28.05.1999
(51) Int. Cl.: F15B 1/22, F15B 1/10, B60T 8/40

(54) **DRUCKMITTELSPEICHER**
HYDRAULIC FLUID ACCUMULATOR
ACCUMULATEUR DE FLUIDE SOUS PRESSION

(30) Priorität: 18.08.1998 DE 19837372; 14.10.1998 DE 19847325
(43) Veröffentlichungstag der Anmeldung: 06.06.2001
(73) Patentinhaber: Continental Teves AG & Co. oHG, 60488 Frankfurt am Main (DE)
(72) Erfinder: BURGDORF, Jochen, D-63075 Offenbach (DE); KLEIN, Andreas, D-61350 Bad Homburg (DE)
(86) Internationale Anmeldenummer: EP9903708
(87) Internationale Veröffentlichungsnummer: WO00011350

(56) Entgegenhaltungen:
- DE-A- 1 425 538
- US-A- 5 520 208
- PATENT ABSTRACTS OF JAPAN vol. 098, no. 005, 30. April 1998 (1998-04-30) & JP 10 019001 A (NHK SPRING CO LTD), 20. Januar 1998 (1998-01-20)

## Beschreibung

Die Erfindung betrifft einen Druckmittelspeicher gemäss dem Oberbegriff des Anspruchs 1. Solch ein Druckmittelspeicher ist aus der JP 10 019001 bekannt.

Druckmittelspeicher dieser Art dienen zum Beispiel in Kraftfahrzeugbremsanlagen zur Aufrechterhaltung eines bestimmten Druckes in der Hydraulikflüssigkeit. Die Membrankammer ist dazu im allgemeinen mit einem Gas gefüllt, dessen Druck im wesentlichen dem gewünschten Druck in der Flüssigkeit entspricht. Bei einem Druckabfall in dem Leitungssystem infolge einer Leckage o.ä. dehnt sich die Kammer entsprechend aus, so daß der Solldruck erhalten bleibt.

Um bei einem zu starken Druckabfall eine Zerstörung der Kammer zu verhindern, ist es wichtig, die Expansion der Kammer zu begrenzen. Zu diesem Zweck ist die Öffnung der Druckmittel-Zuführung mit einem Ventil versehen. Das Ventil wird durch den sich infolge der Expansion der Kammer in Richtung auf die Öffnung bzw. das Ventil verschiebenden Deckel (Stirnwand) der Kammer geschlossen, wenn der Druck auf einen vorbestimmten minimalen Wert abgefallen ist.

Sofern allerdings das Ventil schadhaft ist und seine Dichtungsfunktion nicht mehr erfüllen kann, besteht nach wie vor die Gefahr, daß die Kammer durch einen weiteren Druckabfall bzw. einen weiteren Austritt von Flüssigkeit aus dem Druckmittelspeicher zerstört wird.

Der Erfindung liegt deshalb die Aufgabe zugrunde, einen Druckmittelspeicher der eingangs genannten Art zu schaffen, bei dem auch im Falle eines Versagens der die Öffnung der Druckmittel-Zuführung verschließenden Dichtung die Gefahr einer Zerstörung der Kammer weitgehend ausgeschlossen ist.

Gelöst wird diese Aufgabe mit einem Druckmittelspeicher gemäß Anspruch 1.

Ein Vorteil dieser Lösung besteht darin, daß auf sehr einfache Weise eine zweite Dichtung geschaffen wird, die ihre Wirkung erst dann entfaltet und einen weiteren Druckabfall verhindert, wenn die bekannte Dichtung versagt.

Die Unteransprüche haben vorteilhafte Weiterbildungen der Erfindung zum Inhalt.

Danach ist die Öffnung der Druckmittel-Zuführung insbesondere mit einem Dichtungselement umgeben, und der Deckel der Membrankammer weist eine zentrale biegesteife Platte auf, die sich bei Erreichen des vorbestimmten Druckabfalls an das Dichtungselement anlegt und dadurch das Gehäuse gegen die Öffnung abdichtet.

Ferner sind die Seitenwände der Membrankammer vorzugsweise vollständig mit dem elastomeren Material belegt, so daß dieses bei Überschreiten des vorbestimmten Druckabfalls durch Expandieren der balgartigen Falten aus diesen herausgedrückt wird und den Zwischenaum zwischen den Seitenwänden der Membrankammer und der Seitenwand des Gehäuses ausfüllt.

Durch diese Weiterbildung wird ein weiterer Schutz der Membrankammer erreicht. Zusätzlich zu der Begrenzung des Druckabfalls durch die erfindungsgemäße (zweite) Dichtung wird durch Ausfüllen des genannten Zwischenraums eine gefährliche Expansion der Seitenwände, die zu einer Rißbildung führen kann, verhindert.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: einen Querschnitt durch einen erfindungsgemäßen Druckmittelspeicher in einer Arbeitsstellung;
- Fig. 2: einen Querschnitt durch einen Teil des Druckmittelspeichers in einer ersten abdichtenden Stellung; und
- Fig. 3: einen Querschnitt durch einen Teil des Druckmittelspeichers in einer zweiten abdichtenden Stellung.

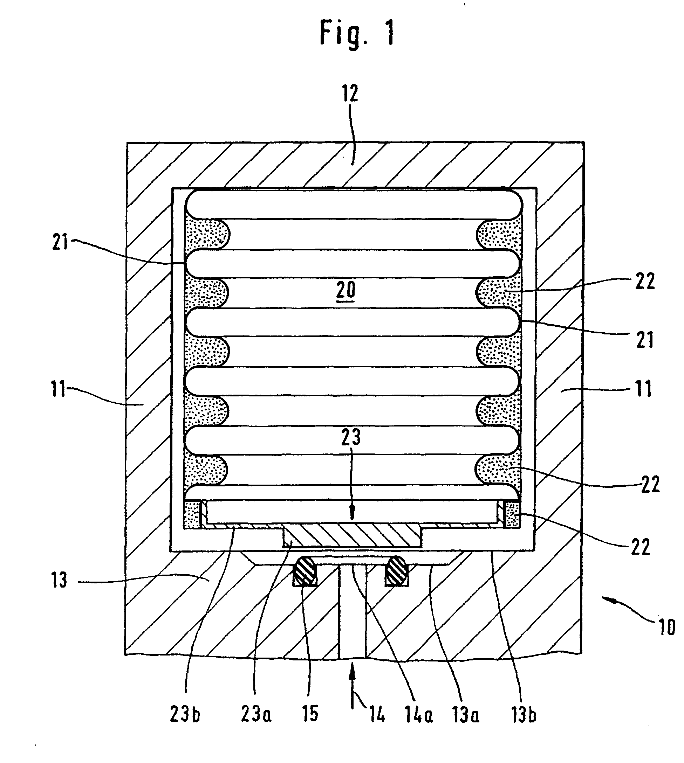

Die Figuren 1 bis 3 zeigen schematisch eine bevorzugte Ausführungsform eines erfindungsgemäßen Druckmittelspeichers, der insbesondere in Kraftfahrzeugbrems- anlagen eingesetzt werden kann.

Figur 1 zeigt den Druckmittelspeicher in einer Arbeitsstellung, in der die Membrankammer im Normalbetrieb einen Druck auf die Hydraulikflüssigkeit ausübt.

Der Druckmittelspeicher weist ein topfförmiges Gehäuse 10 mit einer Seitenwand 11 sowie einer oberen Wand 12 und einer Bodenwand 13 auf. Durch die Bodenwand 13 verläuft eine Druckmittel-Zuführung 14, die in eine Öffnung 14a mündet und in bekannter Weise mit einem Hydraulik-Leitungssystem der Bremsanlage verbunden ist. Die Öffnung 14a in der Bodenwand ist von einem teilweise in die Bodenwand eingelassenen O-Ring 15 umschlossen. Die Öffnung 14a und der O-Ring 15 liegen in einem inneren Bereich 13a der Bodenwand, der gegenüber einem äußeren Randbereich 13b abgesenkt ist.

Innerhalb des Druckmittelspeichers befindet sich eine Membrankammer 20, die durch eine im wesentlichen balgartig gefaltete, dünne Seitenwand 21 aus Metall abgegrenzt ist. Die Seitenwand ist an der oberen Wand 12 des Gehäuses 10 befestigt. Eine der Zuführung 14 gegenüberliegende Stirnwand stellt einen Deckel 23 dar und schließt die Membrankammer.

Der Deckel 23 weist in seinem zentralen, der Öffnung 14a der Druckmittel-Zuführung 14 gegenüberliegenden Bereich eine flache biegesteife Platte 23a auf, deren Radius mindestens so groß ist, wie der Radius des O-Rings 15. Der sich radial an die Platte 23a anschließende äußere Bereich 23b des Deckels ist biegeelastisch ausgebildet. In den äußeren Falten der Seitenwand 21 befindet sich ein elastomeres Material 22.

Die Membrankammer 20 ist mit einem komprimierten Gas gefüllt, dessen Druck im wesentlichen dem gewünschten Druck in dem an die Zuführung angeschlossenen Hydraulik-Leitungssystem entspricht.

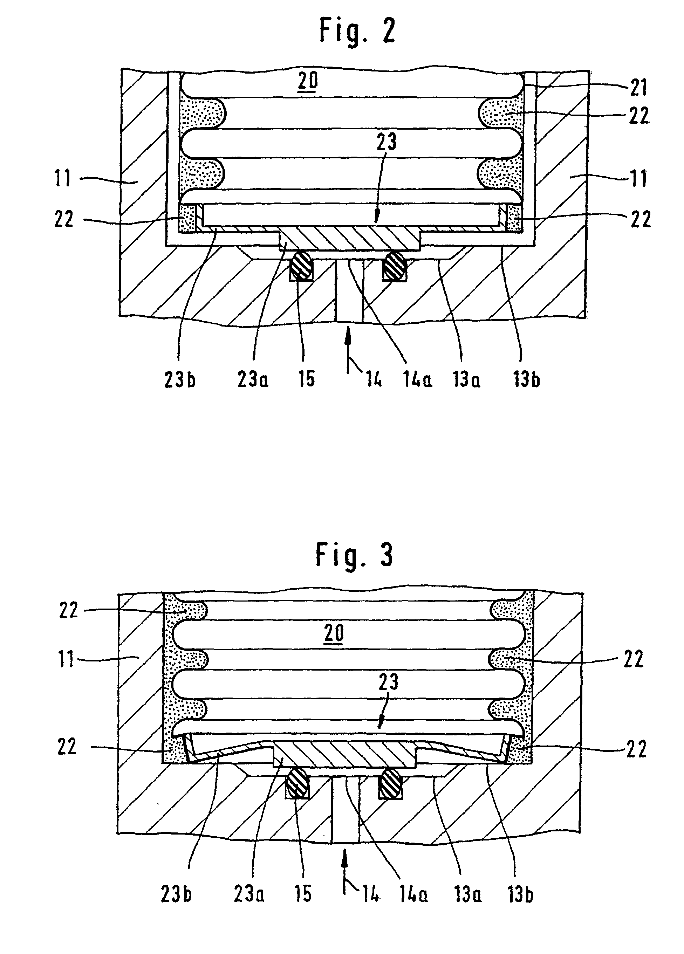

Figur 2 zeigt einen Zustand des Druckmittelspeichers, in dem sich die Membrankammer bei Erreichen eines vorbestimmten Druckabfalls in der Hydraulikflüssigkeit so weit expandiert hat, daß die biegesteife Platte 23a des Deckels 23 auf den die Öffnung 14a der Zuführung 14 umgebenden O-Ring 15 drückt. Dies führt dazu, daß ein weiterer Austritt von Flüssigkeit aus dem Druckmittelspeicher verhindert wird, da die Zuführung nun gegen den Innenraum des Gehäuses 10 abgedichtet ist.

Sofern die durch die biegesteife Platte 23a und den O-Ring 15 gebildete Dichtung ihre Funktion nicht (mehr) erfüllen kann, weil zum Beispiel der O-Ring schadhaft geworden ist, tritt zunächst noch eine weitere relativ kleine Flüssigkeitsmenge durch die Öffnung 14a aus dem Gehäuse 10 aus. Ein Überschreiten des vorbestimmten Druckabfalls führt nun dazu, daß durch den innerhalb der Membrankammer 20 wirkenden Druck einerseits der äußere Bereich 23b des Deckels 23 an den äußeren Bereich 13b der Bodenwand 13 des Gehäuses angedrückt und andererseits das elastomere Material 22 aus den Falten der Seitenwand 21 herausgedrückt wird, da die Falten von innen aufgeweitet werden.

Das elastomere Material 22 dichtet dabei den äußeren Bereich 23b des Deckels 23 an dem Gehäuse des Druckmittelspeichers ab und verhindert ein weiteres Hindurchtreten von Hydraulikflüssigkeit durch die fehlerhafte Dichtung. Das in den Zwischenaum zwischen der Seitenwand 21 der Membrankammer 20 und der Seitenwand 11 des Gehäuses 10 gedrückte elastomere Material 22 wirkt als Kissen und verhindert eine weitere Expansion und eventuelle Rißbildung an der Membrankammer.

Die Dicke der Platte 23a, die Biegeelastizität des äußeren Bereiches 23b des Deckels 23 und die Tiefe des abgesenkten Bereiches 13a der Bodenwand 13 sind so aufeinander abgestimmt, daß der Druckmittelspeicher bei Erreichen eines vorbestimmten Druckabfalls die in Figur 2 dargestellte erste abdichtende Stellung und bei Überschreiten dieses Druckabfalls um ein vorbestimmtes Maß die in Figur 3 dargestellte zweite abdichtende Stellung einnimmt.

Zum Beispiel wird bei relativ großer Biegeelastizität des äußeren Bereiches 23b und relativ geringem Unterschied zwischen der Dicke der Platte 23a und der Tiefe des abgesenkten Bereiches 13a die zweite abdichtende Stellung schon unmittelbar nach dem Überschreiten des vorbestimmmten Druckabfalls eingenommen.

### Bezugszeichenliste

- 10 -: Gehäuse
- 11 -: Seitenwand des Gehäuses
- 12 -: obere Wand des Gehäuses
- 13, 13a, 13b -: Bodenwand
- 14 -: Druckmittel-Zuführung
- 14a -: Öffnung der Druckmittel-Zuführung
- 15 -: O-Ring
- 20 -: Membrankammer
- 21 -: Seitenwand der Membrankammer
- 22 -: elastomeres Material
- 23 -: Deckel
- 23a -: biegesteife Platte
- 23b -: biegeelastischer Bereich

## Patentansprüche

1. Druckmittelspeicher, insbesondere für schlupfgeregelte Kraftfahrzeugbremsanlagen, mit einem Gehäuse (10) mit einer Öffnung (14a) für eine Druckmittel-Zuführung (14), einer im Gehäuse (10) angeordneten Membrankammer (20) mit balgartig gefalteten Seitenwänden (21) und einem Ventil (14a, 15, 23), das mittels eines sich infolge der Expansion der Membrankammer (20) in Richtung auf die Öffnung (14a) beweglichen Deckels (23) schließbar ist, **dadurch gekennzeichnet, daß** die Membrankammer (20) an ihren an den Deckel (23) angrenzenden Bereichen der Seitenwände (21) mit einem elastomeren Material (22) umgeben und der Deckel (23) in der Weise biegeelastisch ist, daß er bei Überschreiten eines vorbestimmten Druckabfalls in dem Druckmittel mittels des elastischen Materials (22) an einen die Öffnung (14a) umschließenden Bereich des Gehäuses (10) dichtend anlegbar ist.

2. Druckmittelspeicher nach Anspruch 1, **dadurch gekennzeichnet, daß** die Öffnung (14a) mit einem Dichtungselement (15) umgeben ist und der Deckel (23) der Membrankammer (20) eine zentrale biegesteife Platte (23a) aufweist, die sich bei Erreichen des vorbestimmten Druckabfalls an das Dichtungselement (15) anlegt und dadurch das Gehäuse (10) gegen die Öffnung (14a) abdichtet.

3. Druckmittelspeicher nach Anspruch 2, **dadurch gekennzeichnet, daß** das Dichtungselement ein O-Ring (15) ist.

4. Druckmittelspeicher nach einem der vorhergehenden Ansprüche, **dadurch gekennzeichnet, daß** die Seitenwände (21) der Membrankammer (20) mit dem elastomeren Material (22) belegt sind, so daß dieses bei Überschreiten des vorbestimmten Druckabfalls durch Expandieren der balgartigen Falten aus diesen herausgedrückt wird und den Raum zwischen den Seitenwänden (21) und der Seitenwand (11) des Gehäuses (10) ausfüllt.

5. Druckmittelspeicher nach einem der vorhergehenden Ansprüche, **dadurch gekennzeichnet, daß** das elastomere Material (22) ein Weichgummi ist.

## Claims

1. Pressure fluid accumulator, in particular for slip-controlled automotive vehicle brake systems, including a housing (10) with an opening (14a) for a pressure fluid supply line (14), a diaphragm chamber (20) arranged in the housing (10) with lateral walls (21) folded like a bellows, and a valve (14a, 15, 23) which is adapted to be closed by way of a lid (23) that is movable in the direction of the opening (14a) as a result of expansion of the diaphragm chamber (20),
**characterized in that** the diaphragm chamber (20) at its areas of the lateral walls (21) adjacent to the lid (23) is enclosed by an elastomeric material (22), and the lid (23) is flexible in such a fashion that it moves into sealing abutment on an area of the housing (10) which encompasses the opening (14a) when a predetermined pressure decline in the pressure fluid is exceeded.

2. Pressure fluid accumulator as claimed in claim 1,
**characterized in that** the opening (14a) is encompassed by a sealing element (15), and the lid (23) of the diaphragm chamber (20) includes a central flexurally resistant plate (23a) which moves into abutment on the sealing element (15) and thereby seals the housing (10) in relation to the opening (14a) when the predetermined pressure decline is reached.

3. Pressure fluid accumulator as claimed in claim 2,
**characterized in that** the sealing element is an O-ring (15).

4. Pressure fluid accumulator as claimed in any one of the preceding claims,
**characterized in that** the lateral walls (21) of the diaphragm chamber (20) are coated with the elastomeric material (22) so that when the predetermined pressure decline is exceeded, the material, by expanding of the bellows-type folds, is urged out of the folds and fills the space between the lateral walls (21) and the lateral wall (11) of the housing (10).

5. Pressure fluid accumulator as claimed in any one of the preceding claims,
**characterized in that** the elastomeric material (22) is a soft rubber.

## Revendications

1. Accumulateur de liquide de pression, en particulier pour des systèmes de frein d'automobile commandés par glissement, comportant un boîtier (10) ayant une ouverture (14a) pour l'alimentation de liquide de pression (14), une chambre diaphragme (20) disposée dans le boîtier (10) avec des parois latérales (21) accordéonnées et une soupape (14a, 15, 23) fermant par l'intermédaire d'un couvercle (23) amovible vers l'ouverture (14a) par suite de l'expansion de la chambre diaphragme (20),
**caractérisé en ce que** la chambre diaphragme (20) aux régions des parois latérales (21) aboutissant le couvercle (23) est entournée par une matière élastomère (22) et que le couvercle (23) est flexible de sorte qu'il soit placé de manière étanche à une région du boîtier (10) entournant l'ouverture (14a) par l'intermédiaire de matière élastique (22) aussitôt qu'une réduction de pression prédéterminée dans la liquide de pression soit dépassée.

2. Accumulateur de liquide de pression selon la revendication 1,
**caractérisé en ce que** l'ouverture (14a) est entournée par un élément d'étoupage (15) et que le couvercle (23) de la chambre diaphragme (20) comporte une plaque (23a) centrale résistante à la flexion, se plaçant à l'élément d'étoupage (15) aussitôt que la pression ait atteint un niveau prédéterminé en étoupant le boîtier (10) vers l'ouverture (14a).

3. Accumulateur de liquide de pression selon la revendication 2,
**caractérisé en ce que** l'élément de soupage est un anneau sous forme O.

4. Accumulateur de liquide de pression selon l'une des revendications précédentes,
**caractérisé en ce que** les parois laterales (21) de la chambre diaphragme (20) sont couvertes de la matière élastomère (22) de sorte que la dernière soit pressée des accordéons par l'expansion desquels aussitôt que la réduction de pression prédéterminée soit dépassée et l'espace entre les parois latérales (21) et la parois latérale (11) du boîtier (10) soit rempli.

5. Accumulateur de liquide de pression selon l'une des revendications précédentes,
**caractérisé en ce que** la matière élastomère (22) est un caoutchouc mou.
